# EUROPÄISCHE PATENTSCHRIFT

(11) **EP 3 599 357 B1**
(45) Veröffentlichungstag und Bekanntmachung des Hinweises auf die Patenterteilung: **22.09.2021**
(21) Anmeldenummer: 19187370.2
(22) Anmeldetag: 19.07.2019
(51) Int. Cl.: F02C 3/06

(54) **HOCHDRUCKVERDICHTER FÜR EIN TRIEBWERK**
HIGH PRESSURE COMPRESSOR FOR AN ENGINE
COMPRESSEUR HAUTE PRESSION POUR UN GROUPE MOTEUR

(30) Priorität: 23.07.2018 DE 102018212176
(43) Veröffentlichungstag der Anmeldung: 29.01.2020
(73) Patentinhaber: MTU Aero Engines AG, 80995 München (DE)
(72) Erfinder: Sahota, Harsimar, 85716 Unterschleißheim (DE); Halcoussis, Alexander, 85778 Haimhausen (DE); Elorza Gomez, Sergio, 80997 München (DE)

(56) Entgegenhaltungen:
- US-A1- 2016 123 236
- US-A1- 2016 265 547
- US-A1- 2018 023 511
- Thaddeus Fowler: "Jet engines and propulsion systems for engineers", , 1. Januar 1989 (1989-01-01), Seiten 1,2, 106-108, XP055645505, Cincinnati Gefunden im Internet: URL:http://www.neoblackpanther.com/jet_eng ine/Jet-Engines-Engine.pdf [gefunden am 2019-11-22]

## Beschreibung

### Technisches Gebiet

Die vorliegende Erfindung betrifft einen Hochdruckverdichter für ein Triebwerk.

### Stand der Technik

Das Triebwerk gliedert sich funktional in Verdichter, Brennkammer und Turbine. Dabei wird angesaugte Luft im Verdichter komprimiert und in der nachgelagerten Brennkammer mit hinzugemischtem Kerosin verbrannt. Das entstehende Heißgas, eine Mischung aus Verbrennungsgas und Luft, durchströmt die nachgelagerte Turbine und wird dabei expandiert. Dem strömenden Gas wird dabei anteilig auch Energie entzogen, um den Verdichter bzw. im Falle eines Mantelstromtriebwerks auch den Fan anzutreiben. Der vorliegende Gegenstand richtet sich zunächst auf ein Modul des Verdichters, nämlich den Hochdruckverdichter. Ein Verdichter nach dem Stand der Technik ist aus dem Dokument "Jet engines and propulsion systems for engineers; Thaddeus Fowler, Cincinnati" bekannt.

### Darstellung der Erfindung

Der vorliegenden Erfindung liegt das technische Problem zugrunde, einen besonders vorteilhaften Hochdruckverdichter für ein Triebwerk anzugeben.

Dies wird erfindungsgemäß mit dem Hochdruckverdichter gemäß Anspruch 1 gelöst. Dieser weist vier aufeinanderfolgende Quasistufen (QS) mit jeweils einem Stator und einem nachgelagerten Rotor auf, die sich durch folgende Schaufeldichtigkeiten im Mittelschnitt bei halber Kanalhöhe auszeichnen:

**Tab. 1**

| | | **min** | **max** |
|---|---|---|---|
| **1. QS** | Stator | 1,04 | 1,19 |
| | Rotor | 1,46 | 1,67 |
| **2. QS** | Stator | 1,13 | 1,32 |
| | Rotor | 1,32 | 1,61 |
| **3. QS** | Stator | 1,2 | 1,39 |
| | Rotor | 1,16 | 1,41 |
| **4. QS** | Stator | 1,37 | 1,63 |
| | Rotor | 1,15 | 1,41 |

Die Schaufeldichtigkeit (englisch *solidity*) ist der Kehrwert des Teilungsverhältnisses T/L (das Teilungsverhältnis ergibt sich als Verhältnis des Umfangsabstands der Schaufeln zur Schaufelsehnenlänge). Bei Betrachtung der vorliegend angegebenen Schaufeldichtigkeiten liegen speziell die Werte der 2. und 3. Quasistufe deutlich unter dem, was mit Blick auf eine stabile Auslegung zunächst angenommen werden würde. In einer konventionellen Herangehensweise würde man für die Rotoren dort die Schaufeldichtigkeit um mindestens 10 % höher ansiedeln, und auch im Falle der Statoren um mehrere Prozent. Umgekehrt wäre in einem solchen Referenzdesign, das sich nach konventionellen Kriterien ergeben würde, die Schaufeldichtigkeit des Stators der 4. Quasistufe etwas geringer als vorliegend. Es wurde jedoch festgestellt, dass durch eine gewisse Erhöhung bzw. Verlagerung der Schaufeldichtigkeit in den hinteren Bereich die angegebenen Absenkungen in den vorderen Quasistufen möglich werden, wobei noch immer hinreichend Stabilität erzielt wird (betrachtet wird hierbei Teillast, die besonders kritisch ist).

Generell ist die Verringerung der Schaufeldichtigkeit hinsichtlich des Wirkungsgrads von Vorteil. Je geringer die Schaufeldichtigkeit, je geringer also die benetzte Fläche ist, desto kleiner werden auch die Reibungsverluste. Eine Verringerung des Treibstoff- bzw. Kerosinverbrauchs kann sich jedoch nicht nur im Kontext des Wirkungsgrads ergeben, sondern auch infolge eines aufgrund der geringeren Schaufeldichtigkeit geringeren Gewichts. Speziell bei den Statoren ist eine Kostenersparnis auch insoweit möglich, als die geringere Schaufeldichtigkeit bzw. Schaufelzahl auch eine geringere Zahl an Bauteilen bedeuten kann, was besonders bei verstellbaren Statoren relevant wird. Bevorzugt sind zumindest die vorderen Stufen mit Verstellstatoren bestückt.

Die Verringerung der Schaufeldichtigkeiten in der 2. und 3. Quasistufe kann somit aus unterschiedlichen Gründen von Vorteil sein. Etwas vereinfacht zusammengefasst wird diese vorteilhafte Auslegung der 2. und 3. Quasistufe durch eine Erhöhung und damit auf den ersten Blick bzw. für sich betrachtet nachteilige Auslegung der 4. Quasistufe möglich.

Bevorzugte Ausführungsformen finden sich in den abhängigen Ansprüchen und der gesamten Offenbarung, wobei bei der Darstellung der Merkmale nicht immer im Einzelnen zwischen Vorrichtungs- oder Verwendungsaspekten unterschieden wird; jedenfalls implizit ist die Offenbarung hinsichtlich sämtlicher Anspruchskategorien zu lesen. Sie betrifft insbesondere stets sowohl den Hochdruckverdichter als auch den gesamten Verdichter oder auch ein Triebwerk damit.

Die vorliegend in Bezug genommenen Quasistufen sind jeweils aus einem Stator mit einem in Strömungsrichtung des Verdichtergases darauffolgenden Rotor aufgebaut. In einer alternativen Betrachtungsweise könnte der Stator der 1. Quasistufe als Einlassgitter betrachtet werden und die darauffolgenden Rotor-Stator-Paare jeweils als Stufe (in den Stufen folgt der jeweilige Stator auf den Rotor).

In bevorzugter Ausgestaltung liegen die Schaufeldichtigkeiten der ersten vier Quasistufen in den folgenden Bereichen:

**Tab. 2**

| | | |
|---|---|---|
| **1. QS** | Stator | 1,14 bis 1,18, insbesondere 1,16 |
| | Rotor | 1,61 bis 1,65, insbesondere 1,63 |
| **2. QS** | Stator | 1,24 bis 1,28, insbesondere 1,26 |
| | Rotor | 1,44 bis 1,48, insbesondere 1,46 |
| **3. QS** | Stator | 1,31 bis 1,35, insbesondere 1,33 |
| | Rotor | 1,27 bis 1,31, insbesondere 1,29 |
| **4. QS** | Stator | 1,46 bis 1,50, insbesondere 1,48 |
| | Rotor | 1,26 bis 1,30, insbesondere 1,28 |

In bevorzugter Ausgestaltung sind die Schaufeldichtigkeiten der Statoren über den Umfang nicht äquidistant verteilt, was bspw. Fremd-, Zwischen oder Eigenanregungen vorbeugen helfen kann. Dabei wird, bezogen auf die Einbaulage des Hochdruckverdichters, also bezogen auf das am Flugzeug montierte Triebwerk, zwischen einer unteren Hälfte des Stators (bottom) und einer oberen Hälfte (top) unterschieden. Bevorzugt kann hierbei folgende Aufteilung der Schaufeldichtigkeiten sein:

**Tab. 3**

| | **bottom** | | **top** | |
|---|---|---|---|---|
| | **min** | **max** | **min** | **max** |
| **Stator (1. QS)** | 1,02 | 1,13 | 1,07 | 1,19 |
| **Stator (2. QS)** | 1,19 | 1,37 | 1,08 | 1,26 |
| **Stator (3. QS)** | 1,16 | 1,37 | 1,25 | 1,41 |
| **Stator (4. QS)** | 1,41 | 1,67 | 1,34 | 1,58 |

In bevorzugter Ausgestaltung werden die in Tab. 1 angegebenen Schaufeldichtigkeiten mit folgenden Schaufelzahlen realisiert, die jeweils in einem Intervall (min/max) und mit einem besonders bevorzugten Wert angegeben sind:

**Tab. 4**

| | | **min** | **max** | **bevorzugt** |
|---|---|---|---|---|
| **1. QS** | Stator | 37 | 41 | 39 |
| | Rotor | 24 | 28 | 26 |
| **2. QS** | Stator | 42 | 46 | 44 |
| | Rotor | 34 | 38 | 36 |
| **3. QS** | Stator | 52 | 56 | 54 |
| | Rotor | 48 | 52 | 50 |
| **4. QS** | Stator | 76 | 80 | 78 |
| | Rotor | 52 | 56 | 54 |

Generell ist der vorliegende Hochdruckverdichter bevorzugt aus acht echten Stufen und einem Einlassgitter aufgebaut. Bei Betrachtung der Quasistufen bildet Letzteres den Stator der 1. Quasistufe. Bei dem vorliegenden Hochdruckverdichter ist die Anzahl der Schaufeln der 1. Stufe vergleichsweise niedrig im Verhältnis zur 8. Stufe, deren Rotor bevorzugt 55 Schaufeln haben kann. Ein Verhältnis aus Schaufelzahl des Rotors der 8. Quasistufe zu Schaufelzahl des Rotors der 1. Quasistufe kann generell bspw. zwischen 2 und 2,2 liegen.

Die Erfindung betrifft auch einen Verdichter mit einem vorliegend offenbarten Hochdruckverdichter und einem Niederdruckverdichter. Der Hochdruckverdichter ist bevorzugt achtstufig aufgebaut, der Niederdruckverdichter dreistufig.

Die Erfindung betrifft auch ein Triebwerk mit einem vorliegend diskutierten Verdichter bzw. Hochdruckverdichter.

In bevorzugter Ausgestaltung hat ein Hochdruckverdichterdruckverhältnis des Hochdruckverdichters an einem Gesamtverdichterdruckverhältnis des gesamten Verdichters einen Anteil von höchstens 40 %, wobei höchstens 35 % bzw. 30 % weiter und besonders bevorzugt sind. Bevorzugte Untergrenzen können bspw. bei mindestens 15 %, 20 % bzw. 25 % liegen (in der Reihenfolge der Nennung zunehmend bevorzugt). Betrachtet wird hierbei die sogenannte Cruise-Bedingung, auch als *Aero Design Point* (ADP) bezeichnet.

Bei einer bevorzugten Ausführungsform hat der Hochdruckverdichter ein Hochdruckverdichterdruckverhältnis von mindestens 13, vorzugsweise mindestens 14. Eine Obergrenze kann bei höchstens 16 liegen. Die ersten vier Stufen des Hochdruckverdichters haben bevorzugt ein Druckverhältnis von höchstens 6,5, vorzugsweise höchstens 6,1, eine mögliche Untergrenze liegt bei mindestens 5.

Das Triebwerk ist in bevorzugter Ausgestaltung ein Getriebefan-Triebwerk. Der Fan kann bspw. eine Schaufelzahl von mindestens 18 und höchstens 25 haben, wobei rund 20 Schaufeln besonders bevorzugt sind. Bevorzugt handelt es sich um ein Zweiwellentriebwerk. Das Verhältnis von Fan-Durchmesser zu Verdichterlänge kann bei rund 2,2 liegen (2,2 +/- 0,1), das Verhältnis von Verdichterlänge zu Verdichterdurchmesser bei rund 2,1 (2,1 +/- 0,1).

In bevorzugter Ausgestaltung liegt das Fandruckverhältnis bei höchstens 1,5, bevorzugt sind rund 1,4. Bei dem Fan handelt es sich bevorzugt um einen Getriebefan.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

### Im Einzelnen zeigt

- Figur 1: einen schematischen Axialschnitt eines Mantelstromtriebwerks;
- Figur 2: in schematischer Darstellung einen Teil eines erfindungsgemäßen Hochdruckverdichters für ein Mantelstromtriebwerk;
- Figur 3: die Schaufeldichtigkeiten bzw. Schaufelzahlen der ersten vier Quasistufen des Hochdruckverdichters gemäß Figur 2;
- Figur 4: in einem Diagramm die Schaufeldichtigkeit der Statoren der ersten vier Quasistufen im Vergleich zu einer konventionellen Auslegung.

### Bevorzugte Ausführung der Erfindung

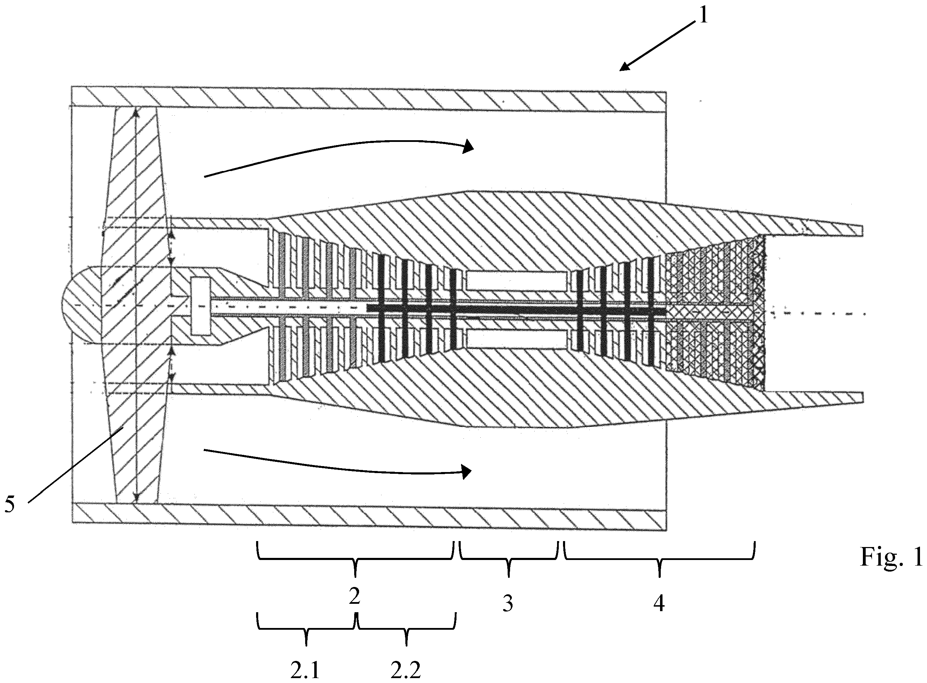

**Figur 1** zeigt ein Mantelstromtriebwerk 1 in einem Axialschnitt. Es gliedert sich funktional in Verdichter 2, Brennkammer 3 und Turbine 4. In dem Verdichter 2, der aus einem Nicdcrdruckvcrdichtcr 2.1 und einem Hochdruckvcrdichtcr 2.2 aufgebaut ist, wird angesaugte Luft komprimiert. In der Brennkammer 3 wird dann Kerosin hinzugemischt und wird diese Mischung verbrannt. Das Heißgas wird in der Turbine 4 expandiert, wobei dem Heißgas anteilig Energie entzogen wird (über die Bewegung der Rotoren). Diese wird zum einen zum Antreiben der Rotoren der Verdichters 2 genutzt, zum anderen zum Antreiben des Fans 5, der wesentlich den Vorschub des Mantelstromtriebwerks 1 erzeugt.

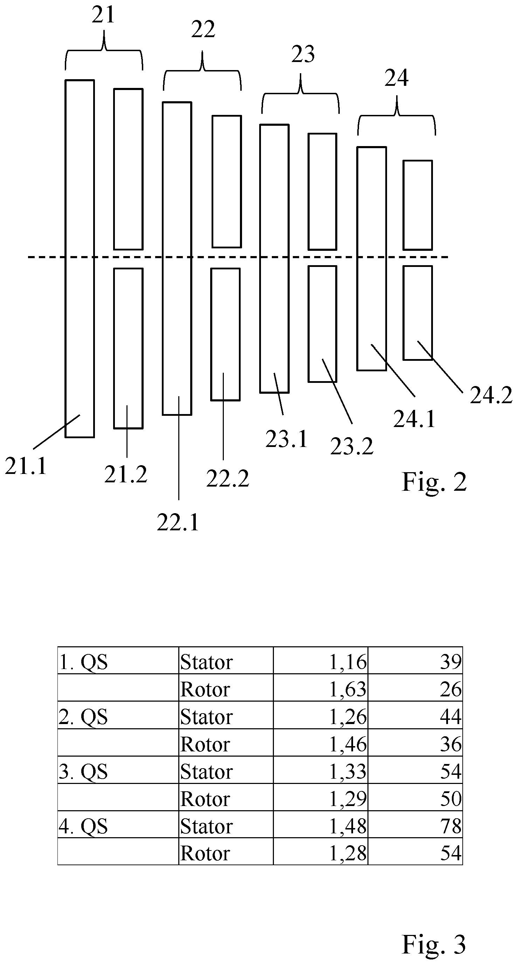

**Figur 2** zeigt einen Teil des Hochdruckverdichters 2.2, nämlich die ersten vier Quasistufen 21-24, insgesamt ist der Hochdruckverdichter 2.2 acht-stufig aufgebaut. Jede der Quasistufen 21-24 weist einen Stator 21.1,22.1,23.1,24.1 und einen nachgelagerten Rotor 21.2,22.2,23.2,24.2 auf. Würde man alternativ Stufen aus Rotor und darauffolgenden Stator betrachten, wäre der Stator 21.1 als Einlassgitter (*Inlet Guide Vane,* IGV) zu betrachten.

Die Schaufeldichtigkeiten bzw. Schaufelzahlen der Quasistufen 21-24 gemäß Figur 2 sind in **Figur 3** angegeben (in der dritten Spalte die Schaufeldichtigkeiten, in der vierten die Schaufelzahlen). Speziell in der 2. und 3. Quasistufe 22,23 sind die Werte gegenüber einer konventionellen Auslegung deutlich verringert. Sie liegen unter dem, was man gewöhnlich für das Design eines stabilen Verdichters als notwendig betrachten würde.

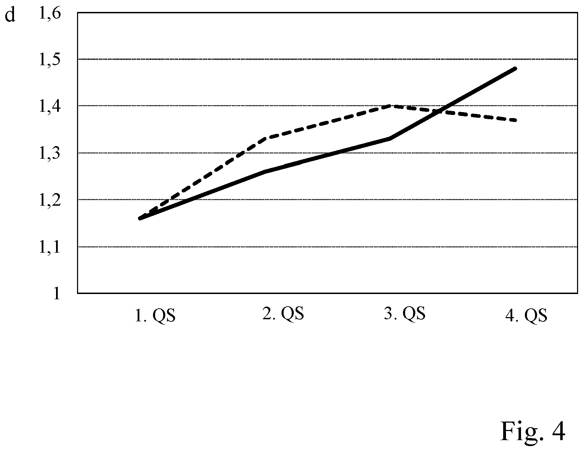

**Figur 4** zeigt die Schaufeldichtigkeit d der Statoren im Vergleich zu einem solchen konventionellen Design. Die durchgezogene Linie entspricht der erfindungsgemäßen Auslegung, die strichlierte Linie dem Referenzdesign. Neben der Absenkung in der 2. und 3. Quasistufe 22,23 ist ferner zu erkennen, dass die Schaufeldichtigkeit in der 4. Quasistufe etwas erhöht wurde. Es wird auf die Bemerkungen in der Beschreibungseinleitung verwiesen.

**BEZUGSZEICHENLISTE**

| | |
|---|---|
| Triebwerk | 1 |
| Verdichter | 2 |
| Niederdruckverdichter | 2.1 |
| Hochdruckverdichter | 2.2 |
| Fan | 5 |
| Erste Quasistufe | 21 |
| Stator | 21.1 |
| Rotor | 21.2 |
| Zweite Quasistufe | 22 |
| Stator | 22.1 |
| Rotor | 22.2 |
| Dritte Quasistufe | 23 |
| Stator | 23.1 |
| Rotor | 23.2 |
| Vierte Quasistufe | 24 |
| Stator | 24.1 |
| Rotor | 24.2 |
| Schaufeldichtigkeit | d |

## Patentansprüche

1. Hochdruckverdichter (2.2) für ein Triebwerk (1), mit einer ersten (21), zweiten (22), dritten (23) und vierten Quasistufe (24), mit jeweils einem Stator (21.1-24.1) und einem nachgelagerten Rotor (21.2-24.2), wobei eine jeweilige Schaufeldichtigkeit (d) im Mittelschnitt
- in der ersten Quasistufe (21) für den Stator (21.1) bei mindestens 1,04 und höchstens 1,18 und für den Rotor (21.2) bei mindestens 1,46 und höchstens 1,67 liegt;
- in der zweiten Quasistufe (22) für den Stator (22.1) bei mindestens 1,13 und höchstens 1,32 und für den Rotor (22.2) bei mindestens 1,32 und höchstens 1,61 liegt;
- in der dritten Quasistufe (23) für den Stator (23.1) bei mindestens 1,20 und höchstens 1,39 und für den Rotor (23.2) bei mindestens 1,16 und höchstens 1,41 liegt;
- in der vierten Quasistufe (24) für den Stator (24.1) bei mindestens 1,37 und höchstens 1,63 und für den Rotor (24.2) bei mindestens 1,15 und höchstens 1,41 liegt.

2. Hochdruckverdichter (2.2) nach Anspruch 1, bei welchem die jeweilige Schaufeldichtigkeit (d) im Mittelschnitt
- für den Stator (21.1) der ersten Quasistufe (21) im Bereich von 1,14 bis 1,18, insbesondere bei 1,16, liegt;
- für den Stator (22.1) der zweiten Quasistufe (22) im Bereich von 1,24 bis 1,28, insbesondere bei 1,26, liegt;
- für den Stator (23.1) der dritten Quasistufe (23) im Bereich von 1,31 bis 1,35, insbesondere bei 1,33, liegt;
- für den Stator (24.1) der vierten Quasistufe (24) im Bereich von 1,46 bis 1,50, insbesondere bei 1,48, liegt.

3. Hochdruckverdichter (2.2) nach Anspruch 1 oder 2, bei welchem die jeweilige Schaufeldichtigkeit (d) im Mittelschnitt
- für den Rotor (21.2) der ersten Quasistufe (21) im Bereich von 1,61 bis 1,65, insbesondere bei 1,63, liegt;
- für den Rotor (22.2) der zweiten Quasistufe (22) im Bereich von 1,44 bis 1,48, insbesondere bei 1,46, liegt;
- für den Rotor (23.2) der dritten Quasistufe (23) im Bereich von 1,27 bis 1,31, insbesondere bei 1,29, liegt;
- für den Rotor (24.2) der vierten Quasistufe (24) im Bereich von 1,26 bis 1,30, insbesondere bei 1,28 liegt.

4. Hochdruckverdichter (2.2) nach einem der vorstehenden Ansprüche, bei welchem jeweils in einer, bezogen auf eine Einbaulage des Hochdruckverdichters (2.2), unteren Hälfte des jeweiligen Stators (21.1-24.1) eine jeweilige Schaufeldichtigkeit (d) im Mittelschnitt
- in der ersten Quasistufe (21) bei mindestens 1,02 und höchstens 1,13 liegt;
- in der zweiten Quasistufe (22) bei mindestens 1,19 und höchstens 1,37 liegt;
- in der dritten Quasistufe (23) bei mindestens 1,16 und höchstens 1,37 liegt;
- in der vierten Quasistufe (24) bei mindestens 1,41 und höchstens 1,67 liegt.

5. Hochdruckverdichter (2.2) nach einem der vorstehenden Ansprüche, bei welchem jeweils in einer, bezogen auf eine Einbaulage des Hochdruckverdichters (2.2), oberen Hälfte des jeweiligen Stators (21.1-24.1) eine jeweilige Schaufeldichtigkeit (d) im Mittelschnitt
- in der ersten Quasistufe (21) bei mindestens 1,07 und höchstens 1,19 liegt;
- in der zweiten Quasistufe (22) bei mindestens 1,08 und höchstens 1,26 liegt;
- in der dritten Quasistufe (23) bei mindestens 1,25 und höchstens 1,41 liegt;
- in der vierten Quasistufe (24) bei mindestens 1,34 und höchstens 1,58 liegt.

6. Hochdruckverdichter (2.2) nach einem der vorstehenden Ansprüche, bei welchem eine jeweilige Schaufelzahl
- in der ersten Quasistufe (21) für den Stator (21.1) bei mindestens 37 und höchstens 41 und für den Rotor (21.2) bei mindestens 24 und höchstens 28 liegt;
- in der zweiten Quasistufe (22) für den Stator (22.1) bei mindestens 42 und höchstens 46 und für den Rotor (22.2) bei mindestens 34 und höchstens 38 liegt;
- in der dritten Quasistufe (23) für den Stator (23.1) bei mindestens 52 und höchstens 56 und für den Rotor (23.2) bei mindestens 48 und höchstens 52 liegt;
- in der vierten Quasistufe (24) für den Stator (24.1) bei mindestens 76 und höchstens 80 und für den Rotor (24.2) bei mindestens 52 und höchstens 56 liegt.

7. Hochdruckverdichter (2.2) nach einem der vorstehenden Ansprüche, bei welchem eine jeweilige Schaufelzahl
- für den Stator (21.1) der ersten Quasistufe (21) bei 39 liegt;
- für den Stator (22.1) der zweiten Quasistufe (22) bei 44 liegt;
- für den Stator (23.1) der dritten Quasistufe (23) bei 54 liegt;
- für den Stator (24.1) der vierten Quasistufe (24) bei 78 liegt.

8. Hochdruckverdichter (2.2) nach einem der vorstehenden Ansprüche, bei welchem eine jeweilige Schaufelzahl
- für den Rotor (21.2) der ersten Quasistufe (21) bei 26 liegt;
- für den Rotor (22.2) der zweiten Quasistufe (22) bei 36 liegt;
- für den Rotor (23.2) der dritten Quasistufe (23) bei 50 liegt;
- für den Rotor (24.2) der vierten Quasistufe (24) bei 54 liegt.

9. Verdichter (2) umfassend einen Hochdruckverdichter (2.2) nach einem der vorstehenden Ansprüche, der insgesamt achtstufig aufgebaut ist, und einen dreistufigen Niederdruckverdichter (2.1).

10. Triebwerk (1) mit einem Hochdruckverdichter (2.2) nach einem der Ansprüche 1 bis 8 oder einem Verdichter (2) nach Anspruch 9.

11. Triebwerk (1) nach Anspruch 10, bei welchem ein Hochdruckverdichterdruckverhältnis des Hochdruckverdichters (2.2) an einem Gesamtverdichterdruckverhältnis des gesamten Verdichters (2) einen Anteil von höchstens 40 % unter Cruise-Bedingung, auch als Aero Design Point bezeichnet, hat.

12. Triebwerk (1) nach Anspruch 10 oder 11, bei welchem der Hochdruckverdichter (2) ein Verdichterdruckverhältnis von mindestens 13 und höchstens 16 aufweist und die ersten vier Stufen des Hochdruckverdichters (2.2) ein Druckverhältnis von mindestens 5 und höchstens 6,5 unter Cruise-Bedingung, auch als Aero Design Point bezeichnet, aufweisen.

13. Triebwerk (1) nach einem der Ansprüche 10 bis 12 mit einem Getriebefan.

14. Triebwerk (1) nach einem der Ansprüche 10 bis 12 mit einem Fan (5), insbesondere Getriebefan, wobei ein Fandruckverhältnis bei höchstens 1,5 unter Cruise-Bedingung, auch als Aero Design Point bezeichnet, liegt.

15. Triebwerk (1) nach 13 oder 14, bei welchem ein Verhältnis von Fan-Durchmesser zu Verdichterlänge bei mindestens 2 liegt.

## Claims

1. High-pressure compressor (2.2) for an engine (1), comprising
a first (21), second (22), third (23) and fourth quasi-stage (24), each having a stator (21.1-24.1) and a downstream rotor (21.2-24.2), wherein a blade solidity (d) in the central section
- in the first quasi-stage (21)
is at least 1.04 and at most 1.18 for the stator (21.1)
and is at least 1.46 and at most 1.67 for the rotor (21.2);
- in the second quasi-stage (22)
is at least 1.13 and at most 1.32 for the stator (22.1)
and is at least 1.32 and at most 1.61 for the rotor (22.2);
- in the third quasi-stage (23)
is at least 1.20 and at most 1.39 for the stator (23.1)
and is at least 1.16 and at most 1.41 for the rotor (23.2);
- in the fourth quasi-stage (24)
is at least 1.37 and at most 1.63 for the stator (24.1)
and is at least 1.15 and at most 1.41 for the rotor (24.2).

2. High-pressure compressor (2.2) according to claim 1, wherein the blade solidity (d) in the central section
- is in the range of from 1.14 to 1.18, in particular 1.16, forthe stator (21.1) of the first quasi-stage (21);
- is in the range of from 1.24 to 1.28, in particular 1.26, forthe stator (22.1) of the second quasi-stage (22);
- is in the range of from 1.31 to 1.35, in particular 1.33, forthe stator (23.1) of the third quasi-stage (23);
- is in the range of from 1.46 to 1.50, in particular 1.48, forthe stator (24.1) of the fourth quasi-stage (24).

3. High-pressure compressor (2.2) according to either claim 1 or claim 2, wherein the blade solidity (d) in the central section
- is in the range of from 1.61 to 1.65, in particular 1.63, forthe rotor (21.2) of the first quasi-stage (21);
- is in the range of from 1.44 to 1.48, in particular 1.46, forthe rotor (22.2) of the second quasi-stage (22);
- is in the range of from 1.27 to 1.31, in particular 1.29, forthe rotor (23.2) of the third quasi-stage (23);
- is in the range of from 1.26 to 1.30, in particular 1.28, forthe rotor (24.2) of the fourth quasi-stage (24).

4. High-pressure compressor (2.2) according to any of the preceding claims, wherein, in each case in a lower half of the respective stators (21.1-24.1), relative to an installation position of the high-pressure compressor (2.2), a blade solidity (d) in the central section
- is at least 1.02 and at most 1.13 in the first quasi-stage (21);
- is at least 1.19 and at most 1.37 in the second quasi-stage (22);
- is at least 1.16 and at most 1.37 in the third quasi-stage (23);
- is at least 1.41 and at most 1.67 in the fourth quasi-stage (24).

5. High-pressure compressor (2.2) according to any of the preceding claims, wherein, in each case in an upper half of the respective stators (21.1 -24.1), relative to an installation position of the high-pressure compressor (2.2), a blade solidity (d) in the central section
- is at least 1.07 and at most 1.19 in the first quasi-stage (21);
- is at least 1.08 and at most 1.26 in the second quasi-stage (22);
- is at least 1.25 and at most 1.41 in the third quasi-stage (23);
- is at least 1.34 and at most 1.58 in the fourth quasi-stage (24).

6. High-pressure compressor (2.2) according to any of the preceding claims, wherein a blade number
- in the first quasi-stage (21)
is at least 37 and at most 41 for the stator (21.1)
and is at least 24 and at most 28 for the rotor (21.2);
- in the second quasi-stage (22)
is at least 42 and at most 46 for the stator (22.1)
and is at least 34 and at most 38 for the rotor (22.2);
- in the third quasi-stage (23)
is at least 52 and at most 56 for the stator (23.1)
and is at least 48 and at most 52 for the rotor (23.2);
- in the fourth quasi-stage (24)
is at least 76 and at most 80 for the stator (24.1)
and is at least 52 and at most 56 for the rotor (24.2).

7. High-pressure compressor (2.2) according to any of the preceding claims, wherein a blade number
- is 39 for the stator (21.1) of the first quasi-stage (21);
- is 44 for the stator (22.1) of the second quasi-stage (22);
- is 54 for the stator (23.1) of the third quasi-stage (23);
- is 78 for the stator (24.1) of the fourth quasi-stage (24).

8. High-pressure compressor (2.2) according to any of the preceding claims, wherein a blade number
- is 26 for the rotor (21.2) of the first quasi-stage (21);
- is 36 for the rotor (22.2) of the second quasi-stage (22);
- is 50 for the rotor (23.2) of the third quasi-stage (23);
- is 54 for the rotor (24.2) of the fourth quasi-stage (24).

9. Compressor (2) comprising a high-pressure compressor (2.2) according to any of the preceding claims, which has a total of eight stages, and a three-stage low-pressure compressor (2.1).

10. Engine (1) comprising a high-pressure compressor (2.2) according to any of claims 1 to 8 or a compressor (2) according to claim 9.

11. Engine (1) according to claim 10, wherein a high-pressure compressor pressure ratio of the high-pressure compressor (2.2) relative to a total compressor pressure ratio of the entire compressor (2) has a proportion of at most 40% under cruise condition, also referred to as the aero design point.

12. Engine (1) according to either claim 10 or claim 11, wherein the high-pressure compressor (2) has a compressor pressure ratio of at least 13 and at most 16 and the first four sta ges of the high-pressure compressor (2.2) have a pressure ratio of at least 5 and at most 6.5 under cruise condition, also referred to as the aero design point.

13. Engine (1) according to any of claims 10 to 12, comprising a geared turbofan.

14. Engine (1) according to any of claims 10 to 12 comprising a fan (5), in particular a geared turbofan, wherein a fan pressure ratio is at most 1.5 under cruise condition, also referred to as the aero design point.

15. Engine (1) according to either claim 13 or claim 14, wherein a ratio of fan diameter to compressor length is at least 2.

## Revendications

1. Compresseur haute pression (2.2) pour un groupe moteur(1), comprenant un premier (21), un deuxième (22), un troisième (23) et un quatrième quasi-niveau (24), chacun d'eux comportant un stator (21.1-24.1) et un rotor aval (21.2-24.2), dans lequel une étanchéité respective des aubes (d) dans la partie médiane
- est d'au moins 1,04 et d'au plus 1,18 pour le stator (21.1)
et d'au moins 1,46 et d'au plus 1,67 pour le rotor (21.2)
au premier quasi-niveau (21) ;
- est d'au moins 1,13 et d'au plus 1,32 pour le stator (22.1)
et d'au moins 1,32 et d'au plus 1,61 pour le rotor
au deuxième quasi-niveau (22) ;
- est d'au moins 1,20 et d'au plus 1,39 pour le stator (23.1)
et d'au moins 1,16 et d'au plus 1,4 pour le rotor (23.2)
au troisième quasi-niveau (23) ;
- est au d'au moins 1,37 et d'au plus 1,63 pour le stator (24.1)
et d'au moins 1,15 et d'au plus 1,41 pour le rotor (24.2)
au quatrième quasi-niveau (24).

2. Compresseur haute pression (2.2) selon la revendication 1, dans lequel l'étanchéité respective des aubes (d) dans la partie médiane
- est comprise entre 1,14 et 1,18, en particulier est de 1,16 pour le stator (21.1) du premier quasi-niveau (21) ;
- est comprise entre 1,24 et 1,28, en particulier est de 1,26 pour le stator (22.1) du deuxième quasi-niveau (22) ;
- est comprise entre 1,31 et 1,35, en particulier est de 1,33 pour le stator (23.1) du troisième quasi-niveau (23) ;
- est comprise entre 1,46 et 1,50, en particulier est de 1,48 pour le stator (24.1) du quatrième quasi-niveau (24).

3. Compresseur haute pression (2.2) selon la revendication 1 ou 2, dans lequel l'étanchéité respective des aubes (d) dans la partie médiane
- est comprise entre 1,61 et 1,65, en particulier est de 1,63 pour le rotor (21.2) du premier quasi-niveau (21) ;
- est comprise entre 1,44 et 1,48, en particulier est de 1,46 pour le rotor (22.2) du deuxième quasi-niveau (22) ;
- est comprise entre 1,27 et 1,31, en particulier est de 1,29 pour le rotor (23.2) du troisième quasi-niveau (23) ;
- est comprise entre 1,26 et 1,30, en particulier est de 1,28 pour le rotor (24.2) du quatrième quasi-niveau (24).

4. Compresseur haute pression (2.2) selon l'une des revendications précédentes, dans lequel, dans une moitié inférieure respective du stator respectif (21.1 -24.1), par rapport à une position de montage du compresseur haute pression (2.2), une étanchéité respective des aubes (d) dans la partie médiane
- est d'au moins 1,02 et d'au plus 1,13 dans le premier quasi-niveau (21) ;
- est d'au moins 1,19 et d'au plus 1,37 dans le deuxième quasi-niveau (22) ;
- est d'au moins 1,16 et d'au plus 1,37 dans le troisième quasi-niveau (23) ;
- est d'au moins 1,41 et d'au plus 1,67 dans le quatrième quasi-niveau (24).

5. Compresseur haute pression (2.2) selon l'une des revendications précédentes, dans lequel, dans une moitié supérieure respective du stator respectif (21.1-24.1), par rapport à une position de montage du compresseur haute pression (2.2), une étanchéité respective des aubes (d) dans la partie médiane
- est d'au moins 1,07 et d'au plus 1,19 dans le premier quasi-niveau (21) ;
- est d'au moins 1,08 et d'au plus 1,26 dans le deuxième quasi-niveau (22) ;
- est d'au moins 1,25 et d'au plus 1,41 dans le troisième quasi-niveau (23) ;
- est d'au moins 1,34 et d'au plus 1,58 dans le quatrième quasi-niveau (24).

6. Compresseur haute pression (2.2) selon l'une des revendications précédentes, dans lequel un nombre respectif d'aubes
- est d'au moins 1,04 et d'au plus 1,18 pour le stator (21.1)
et d'au moins 24 et d'au plus 28 pour le rotor (21.2)
dans le premier quasi-niveau (21) ;
- est d'au moins 1,13 et d'au plus 1,32 pour le stator (22.1)
et d'au moins 34 et d'au plus 38 pour le rotor (22.2)
dans le deuxième quasi-niveau (22) ;
- est d'au moins 1,20 et d'au plus 1,39 pour le stator (23.1)
et d'au moins 48 et d'au plus 52 pour le rotor (23.2)
dans le troisième quasi-niveau (23) ;
- est au d'au moins 1,37 et d'au plus 1,63 pour le stator (24.1)
et d'au moins 52 et d'au plus 56 pour le rotor (24.2)
dans le quatrième quasi-niveau (24).

7. Compresseur haute pression (2.2) selon l'une des revendications précédentes, dans lequel un nombre respectif d'aubes
- est de 39 pour le stator (21.1) du premier quasi-niveau (21) ;
- est de 44 pour le stator (22.1) du deuxième quasi-niveau (22) ;
- est de 54 pour le stator (23.1) du troisième quasi-niveau (23) ;
- est de 78 pour le stator (24.1) du quatrième quasi-niveau (24).

8. Compresseur haute pression (2.2) selon l'une des revendications précédentes, dans lequel un nombre respectif d'aubes
- est de 26 pour le rotor (21.2) du premier quasi-niveau (21) ;
- est de 36 pour le rotor (22.2) du deuxième quasi-niveau (22) ;
- est de 50 pour le rotor (23.2) du troisième quasi-niveau (23) ;
- est de 54 pour le rotor (24.2) du quatrième quasi-niveau (24).

9. Compresseur (2) comprenant un compresseur haute pression (2.2) selon l'une des revendications précédentes, qui comporte au total huit niveaux, et un compresseur basse pression à trois niveaux(2.1).

10. Groupe moteur (1) comportant un compresseur haute pression (2.2) selon l'une des revendications 1 à 8 ou un compresseur (2) selon la revendication 9.

11. Groupe moteur (1) selon la revendication 10, dans lequel un rapport de pression de compresseur haute pression du compresseur haute pression (2.2) dans un rapport de pression de compresseur total de l'ensemble du compresseur (2) présente une proportion d'au plus 40 % en régime de croisière, également appelé point de conception aérodynamique.

12. Groupe moteur (1) selon la revendication 10 ou 11, dans lequel le compresseur haute pression (2) présente un rapport de pression de compresseur d'au moins 13 et d'au plus 16 et les quatre premiers niveaux du compresseur haute pression (2.2) présentent un rapport de pression d'au moins 5 et d'au plus 6,5 en régime de croisière, également appelé point de conception aérodynamique.

13. Groupe moteur (1) selon l'une des revendications 10 à 12 comportant une turbosoufflante à engrenages.

14. Groupe moteur (1) selon l'une des revendications 10 à 12 comportant une soufflante (5), en particulier une turbosoufflante à engrenages, un rapport de pression de soufflante étant d'au plus 1,5 en régime de croisière, également appelé point de conception aérodynamique.

15. Groupe moteur (1) selon la revendication 13 ou 14, dans lequel un rapport entre le diamètre de soufflante et la longueur de compresseurest d'au moins 2.
